Europäisches Patentamt

European Patent Office

Office européen des brevets

(11) Veröffentlichungsnummer: **0 553 670 B1**

## (12) EUROPÄISCHE PATENTSCHRIFT

(45) Veröffentlichungstag der Patentschrift: **09.08.95**

(51) Int. Cl.6: **B60K 23/04**, B60K 23/08, B60K 17/348

(21) Anmeldenummer: **93100642.3**

(22) Anmeldetag: **18.01.93**

(54) **Antriebsanordnung zur Steuerung und Verteilung der Antriebskraft für ein Fahrzeug.**

(30) Priorität: **25.01.92 DE 4202026**

(43) Veröffentlichungstag der Anmeldung:
**04.08.93 Patentblatt  93/31**

(45) Bekanntmachung des Hinweises auf die
Patenterteilung:
**09.08.95 Patentblatt  95/32**

(84) Benannte Vertragsstaaten:
**DE FR GB IT**

(56) Entgegenhaltungen:
EP-A- 0 395 304
EP-A- 0 415 619
DE-A- 3 643 831
DE-A- 3 808 787

PATENT ABSTRACTS OF JAPAN, unexamined applications, M Field, Band 13, Nr.
170,21. April 1989 THE PATENT OFFICE JA-
PANESE GOVERNMENT Seite 96 M 817

PATENT ABSTRACTS OF JAPAN, unexamined applications, M Field, Band 13, Nr. 13,12.
Januar 1989 THE PATENT OFFICE JAPANESE
GOVERNMENT Seite 47 M 783

(73) Patentinhaber: **DEERE & COMPANY**
**1 John Deere Road**
**Moline, Illinois 61265 (US)**

(72) Erfinder: **Weiss, Heinz**
**Karl-Kreuzer-Weg 28**
**W-6140 Bensheim (DE)**

(74) Vertreter: **Feldmann, Bernhard et al**
**DEERE & COMPANY**
**European Office**
**Patent Department**
**D-68140 Mannheim (DE)**

EP 0 553 670 B1

**Beschreibung**

Die Erfindung betrifft eine Antriebsanordnung zur Steuerung und Verteilung der Antriebskraft auf die Räder eines Kraftfahrzeuges mit mindestens zwei angetriebenen Achsen, von denen wenigstens eine Achse ein Achsdifferential enthält, dem eine Achsdifferentialsperre zugeordnet ist. Wenigstens ein Lenkwinkelsensor dient der Erfassung des aktuellen Lenkwinkels. Durch Drehzahlsensoren werden die Drehzahlen zumindest der Fahrzeugräder der wenigstens einen Achse ermittelt. Eine Steuereinrichtung erfaßt die Meßwerte und steuert die Achsdifferentialsperre zur Einstellung der Verteilung der Antriebskraft auf die beiden Räder an. Dabei bildet die Steuereinrichtung aus den ermittelten Drehzahlen der Fahrzeugräder der wenigstens einen Achse laufend einen Drehzahlverhältniswert und vergleicht diesen in vorgebbaren Zeitintervallen mit einer dem Lenkwinkel zugeordneten Verhältnisgröße. Wenn der Drehzahlverhältniswert größer ist als die dem Lenkwinkel zugeordnete Verhältnisgröße, gibt die Steuereinrichtung Steuersignale an die Achsdifferentialsperre ab, die den Sperrgrad des Achsdifferentials erhöhen.

Aus der DE-C-34 08 991 ist eine Antriebsanordnung für ein Fahrzeug mit Allradantrieb bekannt. Diese enthält zur Verringerung des Wenderadius eine Umschalteinrichtung, die bei Überschreiten eines vorgebbaren Lenkeinschlagwinkels der Vorderräder die Radgeschwindigkeit der Vorderräder automatisch so weit erhöht, daß deren Umfangsgeschwindigkeit zwei- bis dreimal so hoch ist wie die der Hinterräder. Ferner wird bei hohen Fahrzeuggeschwindigkeiten der Allradantrieb automatisch auf einen Zweiradantrieb umgeschaltet. Die beim Umschalten auftretenden abrupten Änderungen der Antriebskraftverteilung auf die einzelnen Räder beeinträchtigen jedoch die Lenkstabilität und Fahrsicherheit.

Zur Verbesserung der Lenkstabilität und zur Vermeidung des Durchrutschens des Fahrzeuges wird durch die DE-C-36 26 025 vorgeschlagen, die Verteilung der Antriebskraft auf die Vorder- und Hinterräder beim Auftreten von Gleiterscheinungen zu steuern. Hierfür werden die Fahrzeuggeschwindigkeit, die Radumfangsgeschwindigkeitund der Kurvenradius, der einem Lenkwinkel der Vorderräder entspricht (siehe beispielsweise die DE-C-34 27 725), erfaßt. Aus diesen Werten wird ein dem gewünschten Antriebsdrehmoment entsprechendes Steuersignal gebildet, durch das eine Verteilerkupplung gesteuert wird, um das gewünschte Antriebsmoment an die Hinterräder abzugeben. Diese Antriebseinrichtung erlaubt es jedoch nicht, Gleiterscheinungen, die zwischen den Rädern einer Achse auftreten können, auszugleichen.

Aus der DE-A-36 43 831 geht ein Antriebssystem für die Räder zweier Radpaare der eingangs genannten Art hervor, das zwei Achsdifferentiale und ein Mittendifferential aufweist, denen jeweils eine Differentialsperre zugeordnet ist. Die Raddrehzahlen und der Lenkwinkel werden gemessen und einer Recheneinheit zugeführt. Die Recheneinheit ermittelt das Verhältnis der Drehzahlen der Halbwellen einer Achse und vergleicht dieses mit einer in einer Wertetabelle gespeicherten Verhältnisgröße, die dem gerade gegebenen Lenkwinkel entspricht. Besteht Übereinstimmung, dann wird der Druck an die Differentialsperre dieser Achse um ein bestimmtes Maß reduziert, um den Sperrgrad zu verringern. Nach Ablauf einer festgelegten Zeitspanne erfolgt erneut eine Ermittlung des Verhältnisses der Drehzahlen. Ist dieses größer als die für den zugehörigen Lenkwinkel gespeicherte Verhältnisgröße, so wird der Druck an der Differentialsperre um ein bestimmtes Maß erhöht und der Sperrgrad vergrößert. Durch diese Steuerung der Differentialsperre werden jedoch insbesondere für größere Lenkeinschläge die Antriebskräfte nicht so auf die Räder einer Achse aufgeteilt, daß ein schlupffreies Fahren möglich ist und die antriebsbedingten Verspannungen des Fahrzeugchassis klein gehalten werden. Die DE-A-36 43 831 gibt nicht an, wie die gespeicherten Verhältnisgrößen gewonnen werden können. Ferner erfordert die bekannte Steuerung eine sehr umfangreiche Wertetabelle (Lenkwinkel, fahrzeugspezifische Daten), sofern eine feinfühlige Anpassung erfolgen soll.

Die der Erfindung zugrunde liegende Aufgabe wird darin gesehen, eine Antriebsanordnung der eingangs genannten Art anzugeben, durch die die genannten Probleme überwunden werden und die es ermöglicht, alle Räder eines Fahrzeuges, vornehmlich eines Ackerschleppers, an den Lenk-, Vortriebs- und Bremskräften des Fahrzeuges zu beteiligen und Durchrutscherscheinungen zu vermeiden. Dabei soll ein permanenter Antrieb aller Fahrzeugräder sowohl bei Arbeitseinsätzen, wie Feldarbeit, als auch bei Transportfahrten auf der Straße erhalten bleiben, unabhängig davon, ob das Fahrzeug geradeaus oder durch eine Kurve fährt. Die Antriebskraft soll an die einzelnen Räder, auch die einer Achse, entsprechend den Fahranforderungen und/oder Fahrbedingungen aufteilbar sein.

Die Aufgabe wird ausgehend von dem Oberbegriff des Patentanspruches 1 durch dessen kennzeichnende Merkmale gelöst. Weitere vorteilhafte Ausgestaltungen und Weiterbildungen der Erfindung gehen aus den Unteransprüchen hervor.

Gemäß der Erfindung weist wenigstens eine der Achsen, vorzugsweise jedoch jede Achse des Fahrzeuges, ein Achsdifferential mit einer durch eine Steuereinrichtung beeinflußbaren Achsdifferentialsperre auf. Die Steuereinrichtung ermittelt laufend aus dem Meßwert des Lenkwinkels für schlupffreie Abrollbe-

2

dingungen ein theoretisches und aus den Meßwerten der Drehzahlsensoren ein tatsächliches Geschwindigkeitsdifferenzmaß. Das tatsächliche Geschwindigkeitsdifferenzmaß ist definiert als der Absolutwert der Differenz der Abrollgeschwindigkeiten der beiden Achsräder dividiert durch den Mittelwert der Abrollgeschwindigkeiten der beiden Achsräder:

$$DDM_{ist} = \frac{|V_l - V_r|}{V_m}$$

$V_l$ und $V_r$ sind die Abrollgeschwindigkeiten des linken und rechten Rades und $V_m$ ist eine mittlere Abrollgeschwindigkeit der beiden Räder. $V_m$ kann als Mittelwert aus den beiden Abrollgeschwindigkeiten $V_l$ und $V_r$ gebildet werden. Die Abrollgeschwindigkeiten können aus dem Produkt der gemessenen Drehzahl des jeweiligen Rades und dem zugehörigen effektiven Raddurchmesser gebildet werden. Dabei ist zu beachten, daß die effektiven Raddurchmesser insbesondere vom Reifentyp, der Fahrzeugbelastung, dem Luftdruck der Reifen und deren Verschleiß abhängen kann. Diese Größen können bei der Bildung der Abrollgeschwindigkeiten berücksichtigt werden.

In vorgebbaren Zeitintervallen vergleicht die Steuereinrichtung das tatsächliche mit dem theoretischen Geschwindigkeitsdifferenzmaß und gibt Steuersignale an die Achsdifferentialsperre ab, die eine Erhöhung des Sperrgrades des Achsdifferentials bewirken, wenn das tatsächliche Geschwindigkeitsdifferenzmaß $DDM_{ist}$ größer ist als das theoretische Geschwindigkeitsdifferenzmaß $DDM_{soll}$, und die eine Verringerung des Sperrgrades bewirken, wenn das tatsächliche Geschwindigkeitsdifferenzmaß $DDM_{ist}$ kleiner ist als das theoretische Geschwindigkeitsdifferenzmaß $DDM_{soll}$. Dies bedeutet, daß bei Auftreten einer zu hohen Geschwindigkeits- oder Drehzahldifferenz zwischen den beiden Rädern einer Achse diese durch Abbremsen der Differentialwirkung vermindert wird und daß bei Auftreten einer zu geringen Geschwindigkeits- oder Drehzahldifferenz ein Drehzahlausgleich durch Erhöhung der Differentialwirkung ermöglicht wird. Sind die Geschwindigkeitsdifferenzmaße gleich groß, so wird der Sperrgrad des Achsdifferentials beibehalten.

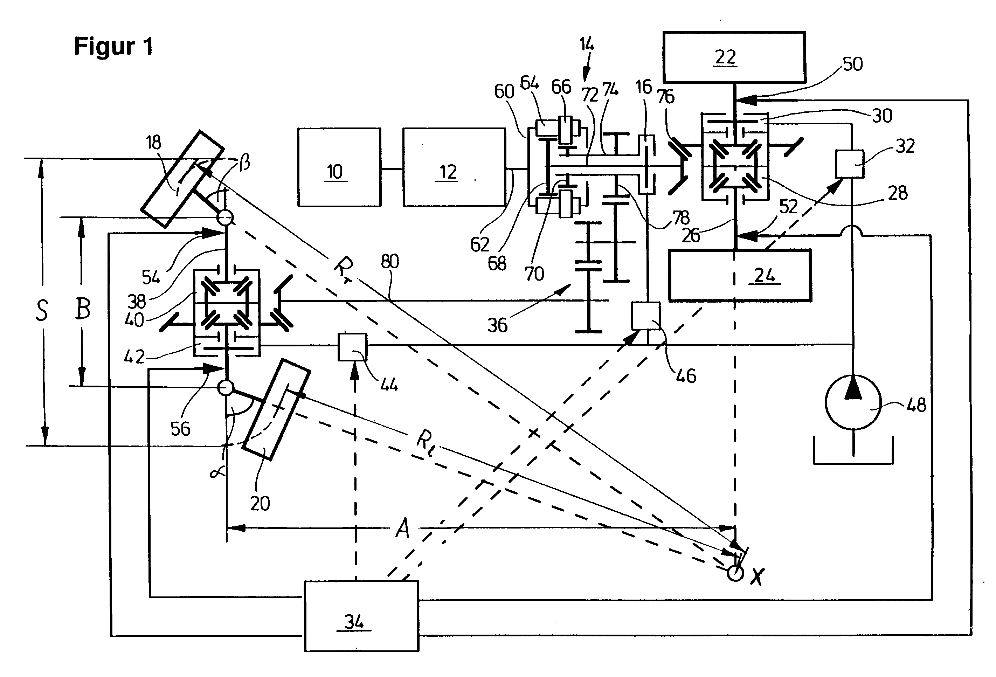

Die theoretischen Abrollgeschwindigkeiten können für schlupffreies Abrollen der Räder aus der Fahrzeuggeometrie und dem Lenkeinschlag abgeleitet werden. Bei einer häufig anzutreffenden Fahrzeuggeometrie treffen sich beispielsweise die Radmittellinien der Vorder- und Hinterräder in einem Punkt X (Fig. 1) auf der Verlängerung der Hinterachsmittellinie (Ackermann-Bedingung, DIN 70000, August 1983), wenn von Lenkfehlern abgesehen wird. Im realen Einsatz weicht das Verhalten des Fahrzeuges jedoch durch Witterungseinflüsse, Fahrbahnzustände, Beladungszustände des Fahrzeuges, Reifendrücke, Fahrgeschwindigkeiten, Kurvenfahrt, abrupte Fahrmanöver etc. von dem theoretischen Idealzustand mehr oder weniger ab. Da der Fahrer das Fahrzeug im wesentlichen über das Lenkrad, welches direkte Antwort sowohl auf die Aktion des Fahrers als auch auf die Reaktion des Fahrzeuges gibt, kontrollieren kann, stellt der Lenkwinkel eine wichtige Basisinformation für den Steuervorgang dar.

Die Steuereinrichtung berechnet das theoretische Geschwindigkeitsdifferenzmaß aus dem Absolutwert der Differenz der beiden Spurkreisradien $R_l$ und $R_r$ des linken und rechten Rades einer Achse dividiert durch den Spurkreisradius $R_m$ einesmittleren Ersatzrades gemäß folgender Beziehung:

$$DDM_{soll} = \frac{|R_l - R_r|}{R_m}$$

Dabei kann das mittlere Ersatzrad durch die Bedingungen nach Ackermann definiert werden. Als mittlerer Spurkreisradius $R_m$ kann der Mittelwert aus den beiden Spurkreisradien $R_l$ und $R_r$ angenommen werden. Die genannten Radien lassen sich für jede gegebene Fahrzeuggeometrie durch einfache geometrische Ableitungen aus den Meßwerten der Lenkwinkel ermitteln. Gemäß Fig. 1 berechnen sich beispielsweise die Spurkreisradien $R_l$ und $R_r$ aus den Beziehungen aus den Beziehungen

$$R_l = A / \sin \text{Alfa} - (S - B) \text{ und}$$
$$R_r = A / \sin \text{Beta} - (S - B).$$

Dabei ist A der bekannte Achsabstand des Fahrzeuges. Alfa und Beta sind die durch Sensoren meßbaren Lenkwinkel des linken und des rechten Rades. S ist die Spurbreite der Vorderräder. B ist der Abstand der beiden Achsschenkelbolzen zueinander und kann vom Lenkwinkel abhängig sein, wenn die Achsschenkelbolzen nicht senkrecht ausgerichtet sind und beispielsweise lenkkinematische Größen wie Nachlauf, Spreizung etc. als achsspezifische Größen einbezogen werden.

Bei der Ableitung vorstehender Steueralgorithmen wurde davon ausgegangen, daß alle Räder schlupffrei um den Momentanpol X drehen. Hieraus folgt, daß die Radgeschwindigkeit gleich dem Produkt aus Spurkreis und Winkelgeschwindigkeit des Rades um den Momentanpol ist. Die Radgeschwindigkeiten der Räder einer Achse verhalten sich wie die zugehörigen Spurkreisdurchmesser.

Die erfindungsgemäße Lösung hat den Vorteil, daß alle Räder des Fahrzeuges entsprechend dessen Ballastierung, den gegebenen Bodenverhältnissen etc. an den Lenk-, Vortriebs- und Bremskräften des Fahrzeuges beteiligbar sind. Auch unter schlechteren Fahrbedingungen kann noch eine optimale Fahrsicherheit, insbesondere auf der Straße, gewährleistet werden, da das Zusammenspiel von Fahrer und Fahrzeug hinsichtlich Lenken, Beschleunigen und Bremsen durch moderiertes Sperren oder Öffnen des Vorderachs-, Hinterachs- und/oder des Zentraldifferentials beeinflußbar ist. Zur Beeinflussung eignet sich vorzugsweise eine elektronische Regelung, die auf schnelle Wechsel der Bedingungen zwischen Rad und Boden anspricht. Alle Fahrzeugräder können sowohl bei Arbeitseinsätzen, wie Feldarbeit, als auch bei Transportfahrten auf der Straße oder bei Kurvenfahrt permanent angetrieben bleiben. Es ist nicht erforderlich, daß für bestimmte Fahrbedingungen eine der Fahrzeugachsen vom Antriebsstrang getrennt wird.

Durch ein gutes Ausballastieren des Fahrzeuges und durch Einhalten der geforderten Reifenluftdrücke kann die Wirkung der erfindungsgemäßen Maßnahmen auf das Fahrzeug verbessert werden.

Gemäß einer Weiterbildung der Erfindung wird nicht nur der Eingriffsgrad der Achsdifferentiale gesteuert. Vielmehr ergibt sich eine weitere Verbesserung des Fahrverhaltens durch eine Steuerung der Differentialwirkung eines zwischen einer angetriebenen Starrachse und einer angetriebenen Lenkachse angeordneten Zentraldifferentials. Mit Starrachse ist hier eine Achse bezeichnet, deren Räder sich nicht lenken lassen.

Die Steuereinrichtung berechnet hierbei aus den Meßwerten der Lenkwinkel einen Radienquotient, der aus dem Spurkreisradius eines mittleren Ersatzrades der Lenkachse dividiert durch den Spurkreisradius eines mittleren Ersatzrades der Starrachse gebildet wird. Die Steuereinrichtung bildet ferner aus den gemessenen Abrollgeschwindigkeiten der Räder für jede Achse einen Drehzahlmittelwert und berechnet einen Drehzahlquotienten aus dem Drehzahlmittelwert der Lenkachse dividiert durch den Drehzahlmittelwert der Starrachse. Sofern der Drehzahlquotient größer ist als der Radienquotient gibt die Steuereinrichtung Steuersignale an eine Zentraldifferentialsperre ab, die den Sperrgrad des Zentraldifferentials erhöhen. Sofern der Drehzahlquotient kleiner ist als der Radienquotient, wird der Sperrgrad des Zentraldifferentials verringert. Das bedeutet, wenn die Räder einer der Achsen durchdrehen, wird das Zentraldifferential mehr gesperrt. Wenn hingegen die Räder einer der Achsen synchron laufen, wird die Differentialwirkung erhöht.

Vorzugsweise enthalten die Differentialsperren hydraulisch betätigbare Kupplungen oder Bremsen, durch die der Sperrgrad einstellbar ist. Die Kupplungen oder Bremsen können durch elektromagnetisch betätigbare Hydraulikventile angesteuert werden, die ihrerseits elektrische Steuersignale von der Steuereinrichtung erhalten. Hierbei können die Achsdifferentiale so ausgelegt sein, daß sie drucklos geöffnet sind und sich durch einen Hydraulikdruck gegen die Kraft einer Feder schließen lassen, während das Zentraldifferential drucklos geschlossen ist und sich durch einen Hydraulikdruck gegen die Kraft einer Feder öffnen läßt. Bei Ausfall der elektrischen und/oder hydraulischen Kreise fällt damit die Antriebsanordnung in ihren mechanischen Ausgangszustand zurück und vermeidet das Eintreten kritischer Betriebsbedingungen.

Da bei Kurvenfahrt die Räder der Lenkachse eine höhere Abrollgeschwindigkeit aufweisen als die Räder der Starrachse, wird durch eine bevorzugte Ausgestaltung der Erfindung vorgeschlagen, die Abrollwege bzw. die Geschwindigkeit der Räder der Lenkachse in Abhängigkeit vom Lenkwinkel zu steigern. Dies kann dadurch erfolgen, daß durch das Zentraldifferential die Getriebeausgangsleistung auf die Lenkachse und die Starrachse in Abhängigkeit des Lenkwinkels derart aufgeteilt wird, daß bei Kurvenfahrt eine automatische Erhöhung der Drehzahl der Lenkachsenräder gegenüber der Drehzahl der Starrachsenräder eintritt.

Die Drehzahlerhöhung läßt sich vorzugsweise stetig dadurch einstellen, daß das Zentraldifferential einen Ravigneaux-Satz enthält, durch den das Abtriebsmoment eines Getriebeausganges entsprechend den Radienverhältnissen der beiden Sonnenräder des Ravigneaux-Satzes auf die Abtriebe zur Lenkachse und zur Starrachse aufgeteilt wird. Zur Vermeidung von Wiederholungen wird zum Zwecke der Offenbarung auf die am 17.08.1991 beim Deutschen Patentamt eingereichte und am 18.02.1993 veröffentlichte Patentanmeldung P 41 27 266.8 (Case 8592) verwiesen.

Gemäß einer alternativen Ausgestaltung der Erfindung läßt sich mit zunehmendem Lenkwinkel die Geschwindigkeit der Lenkräder gegenüber der Geschwindigkeit der Räder der Starrachse auch sprunghaft anheben oder absenken. Hierzu kann auf ein sogenanntes Dual-Speed-Getriebe zurückgegriffen werden, durch das die Lenkachse angetrieben wird. Durch das Dual-Speed-Getriebe läßt sich die Lenkachse in den Antriebsstrang zuschalten. Ferner kann zwischen zwei Antriebsgeschwindigkeiten umgeschaltet werden. Die Umschaltpunkte des Dual-Speed-Getriebes werden durch die vorgebbaren Lenkwinkel und durch die Bedingungen des Patentanspruches 3 festgelegt. Während das Zentraldifferential stufenlos arbeitet, arbeitet das Dual-Speed-Getriebe in definierten Schaltstufen. Die Differentialwirkung kommt hierbei zusätzlich über einen geregelten Druck bzw. Schlupf an der Getriebebremse zustande.

Vorzugsweise wird die Temperatur jeder Differentialsperre gemessen. Bei Überschreiten vorgebbarer Temperaturwerte gibt die Steuereinrichtung Steuersignale an die Differentialsperren ab, durch die diese automatisch völlig geschlossen oder geöffnet werden, so daß die Kupplungen und Bremsen nicht mehr rutschen und Reibungswärme erzeugen.

Zur Erhöhung der Bremswirkung ist zweckmäßigerweise ein Bremssensor vorgesehen, der bei Betätigung einer Fahrzeugbremse anspricht. In diesem Fall gibt die Steuereinrichtung Steuersignale an die Zentraldifferentialsperre ab und schließt diese.

Gemäß einer bevorzugten Weiterbildung der Erfindung werden die Differentialsperren durch die Steuereinrichtung nicht kontinuierlich, sondern periodisch angesteuert, indem die Differentialsperren beispielsweise mit hydraulischen Ventilen in Verbindung stehen, die periodisch mit einer vorgebbaren Grundfrequenz geöffnet und geschlossen werden. Der Eingriffsgrad der Differentialsperre ist dann anhand der Länge der Pulsintervalle, in denen die Ventile geöffnet bzw. geschlossen sind, einstellbar.

Anhand der Zeichnung, die Ausführungsbeispiele der Erfindung zeigt, werden nachfolgend die Erfindung sowie weitere Vorteile und vorteilhafte Weiterbildungen und Ausgestaltungen der Erfindung näher beschrieben und erläutert.

Es zeigt:

Fig. 1    das Schema einer erfindungsgemäßen Antriebsanordnung,

Fig. 2    eine erfindungsgemäße Antriebsanordnung unter Verwendung eines 2-stufigen Drehzahlübertragungsgetriebes für die Vorderachse,

Fig. 3    das Schema einer Ansteuerung für eine Differentialsperre und

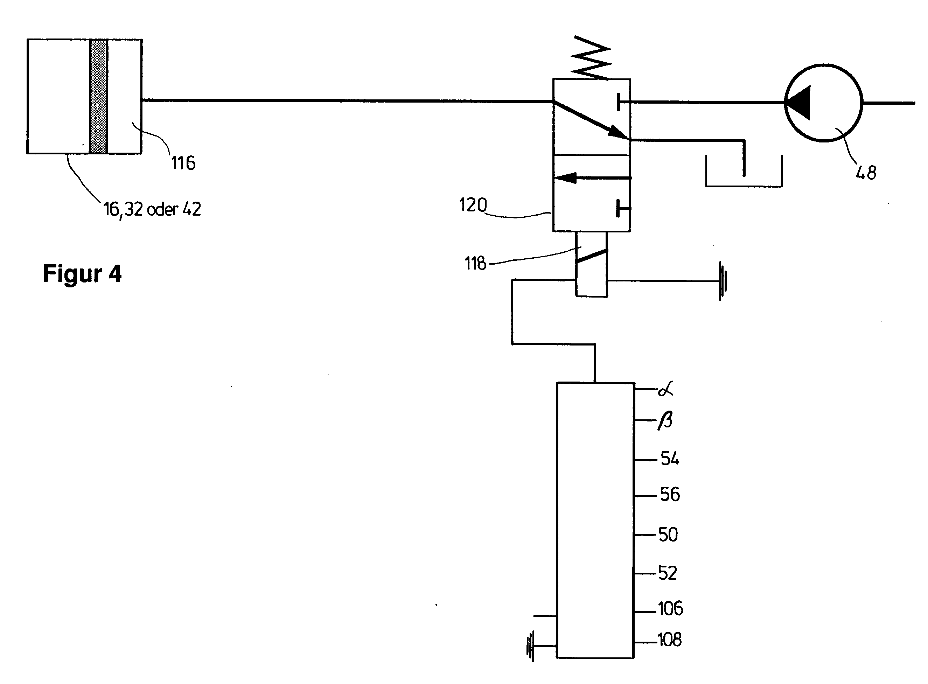

Fig. 4    ein weiteres Schema einer Ansteuerung für eine Differentialsperre.

Aus Fig. 1 geht das Antriebsschema für ein allradangetriebenes Fahrzeug hervor. Ein Antriebsmotor 10 treibt ein Getriebe 12 an, welches antriebsmäßig mit einem Zentraldiffential 14 verbunden ist. Die Differentialwirkung des Zentraldifferentials 14 läßt sich durch eine Zentraldifferentialsperre 16 einstellen. Letztere teilt das vom Getriebe 12 gewandelte Motormoment in einem festen Momentenverhältnis auf die Vorderräder 18, 20 und Hinterräder 22, 24 auf.

Ein erster Leistungszweig führt zur Hinterachse 26 mit einem Hinterachsdifferential 28, welchem eine Hinterachsdifferentialsperre 30 zugeordnet ist. Die Hinterachsdifferentialsperre 30 wird über ein elektrohydraulisches Ventil 32 von einer elektronischen Steuereinrichtung 34 angesteuert.

Der andere Leistungszweig führt über Zwischenräder 36 zur angetriebenen Vorderachse 38 mit einem Vorderachsdifferential 40, welchem eine Vorderachsdifferentialsperre 42 zugeordnet ist. Die Vorderachsdifferentialsperre 42 wird ebenfalls über ein elektro-hydraulisches Ventil 44 von der elektronischen Steuereinrichtung 34 angesteuert.

Die elektronische Steuereinrichtung 34 liefert auch Steuersignale an ein weiteres elektro-hydraulisches Ventil 46, welches die Zentraldifferentialsperre 16 ansteuert. Alle Ventile 32, 44, 46 erhalten ihren Hydraulikdruck von einer Pumpe 48.

An der Hinterachse 26 und der Vorderachse 38 sind Drehzahlsensoren 50, 52, 54, 56 angebracht, die die Drehzahlen der beiden Hinterräder 22, 24 sowie der beiden Vorderräder 18, 20 messen. Die Drehzahlmeßwerte werden an die elektronische Steuereinrichtung 34 geleitet. Ferner sind zwei nicht näher dargestellte Lenkwinkelsensoren vorgesehen, die die Lenkeinschläge (Alfa und Beta) der Vorderräder 18, 20 erfassen und die Meßwerte an die elektronische Steuereinrichtung 34 weitergeben.

Das Zentraldifferential 14 ist als Ravigneaux-Satz ausgebildet, dessen Planetenträger 60 drehfest auf der Getriebeausgangswelle 62 angeordnet ist. Auf dem Planetenträger 60 ist ein Satz von langen Planetenrädern 64 und ein Satz von kurzen Planetenrädern 66 angeordnet. Jeder Planetensatz kann beispielsweise aus drei Rädern bestehen, von denen jedoch nur jeweils ein Rad 64, 66 dargestellt ist. Der Ravigneaux-Satz enthält ferner zwei Sonnenräder 68, 70, die über koaxial verlaufende Abtriebswellen 72, 74 aus dem Ravigneaux-Satz herausgeführt sind. Die langen Planetenräder 64 kämmen mit dem größeren Sonnenrad 68, und die kurzen Planetenräder 66 kämmen mit dem kleineren Sonnenrad 70. Ferner kämmt jedes der langen Planetenräder 64 mit einem der kurzen Planetenräder 66.

Wird bei ruhendem Planetenträger 60 beispielsweise das größere Sonnenrad 68 gedreht, so wird über die langen Planetenräder 64 und die kurzen Planetenräder 66 das andere kleinere Sonnenrad 66 in umgekehrter Drehrichtung angetrieben. Dabei ergibt sich gleichzeitig eine Drehzahlerhöhung entsprechend dem Durchmesserverhältnis der beiden Sonnenräder 64, 66. Diese Funktionsweise des Ravigneaux-Satzes ermöglicht den Einsatz als Differentialgetriebe.

Beim Antrieb des Ravigneaux-Satzes über seinen Planetenträger 60 erfolgt eine Drehmomentenaufteilung auf die Abtriebswellen 72, 74 der beiden Sonnenräder 68, 70 entsprechend dem Durchmesserverhältnis der beiden Sonnenräder 68, 70. Die Abtriebswelle 72 des größeren Sonnenrades 68 steht mit einem Kegelrad 76 des Hinterachsdifferentials 28 in Verbindung. Die Abtriebswelle 74 des kleineren Sonnerades 70 ist als Hohlwelle ausgebildet, durch die die zuerst genannte Abtriebswelle 72 verläuft. Sie trägt ein Zahnrad 78, welches über die Zwischenräder 36 und die Frontantriebswelle 80 das Vorderachsdifferential 40 antreibt.

Die beiden Abtriebswellen 72, 74 lassen sich durch eine als Kupplung ausgebildete Zentraldifferentialsperre 16 miteinander verbinden, so daß die Differentialwirkung des Ravigneaux-Satzes ganz oder teilweise unterdrückbar ist.

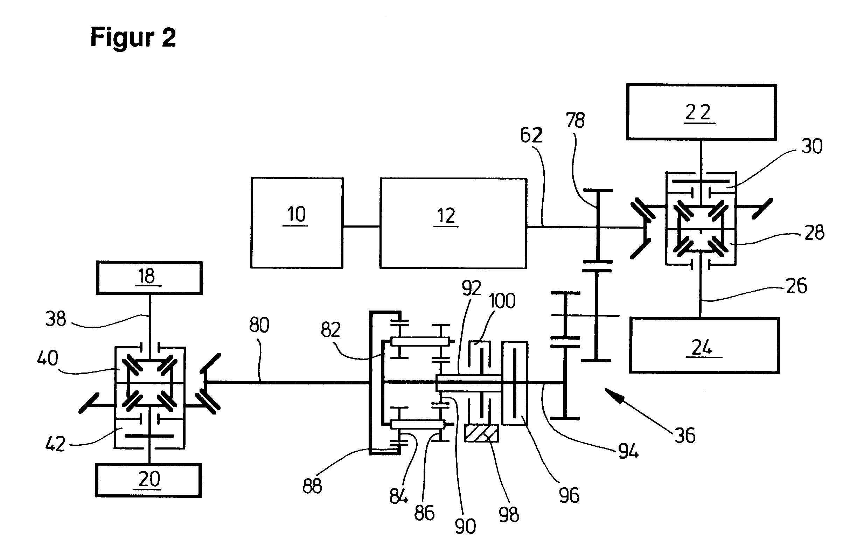

Die Antriebsanordnung gemäß Fig. 2 unterscheidet sich von der Antriebsanordnung gemäß Fig. 1 im wesentlichen dadurch, daß sie kein Zentraldifferential aufweist, durch das eine Aufteilung des Abtriebsmomentes auf zwei Achsen erfolgt. Hier ist das Ausgangszahnrad 78 unmittelbar auf der Getriebeausgangswelle 62 angeordnet. Die Zwischenräder 36 treiben den Planetenträger 82 eines Planetengetriebes an, der zwei Sätze von Planetenrädern 84, 86 trägt. Der erste Planetenrädersatz 84 kämmt mit einem Hohlrad 88, welches mit der Frontantriebswelle 80 verbunden ist. Der zweite Planetenrädersatz 86 steht mit einem Sonnenrad 90 in Eingriff, welches auf einer Hohlwelle 92 montiert ist.

Zwischen dieser Hohlwelle 92 und der Ausgangswelle 94 der Zwischenräder 36 ist eine Kupplung 96 angeordnet. Wird die Kupplung 96 geschlossen, so ist das Planetengetriebe wirkungslos und die Drehzahl der Ausgangswelle 94 wird unmittelbar der Frontantriebswelle 80 mitgeteilt. Wird die Kupplung hingegen ganz geöffnet, so erfolgt keine Drehmomentenübertragung von der Ausgangswelle 94 auf die Frontantriebswelle 80.

Ferner ist zwischen der Hohlwelle 92 und dem Getriebegehäuse 98 eine Bremse 100 angeordnet. Wird die Bremse 100 geschlossen, so steht das Sonnenrad 90 still, und die Drehzahl der Ausgangswelle 94 wird durch das Planetengetriebe erhöht an die Frontantriebswelle abgegeben.

Während das Zentraldifferential die Antriebsdrehzahl von Vorder- und Hinterachse stufenlos und in entgegengesetzter Richtung verstellt, besitzt das in Fig. 2 dargestellte Planetengetriebe mit der Kupplung 96 und der Bremse 100 im wesentlichen drei Schaltstellungen:
- Frontantrieb nicht eingeschaltet (Bremse und Kupplung sind offen),
- Frontantrieb ohne Drehzahlerhöhung eingeschaltet (Bremse offen, Kupplung geschlossen) und
- Frontantrieb mit Drehzahlerhöhung eingeschaltet (Bremse geschlossen, Kupplung offen). Diese Schaltstellung wird durch die Steuereinrichtung 24 eingestellt, wenn der Lenkwinkel einen vorgebbaren Wert, beispielsweise 25 Grad, übersteigt.

Während das Zentraldifferential stufenlos arbeitet, arbeitet das in Fig. 2 dargestellte Zwischengetriebe in definierten Schaltstufen. Die Differentialwirkung kommt hierbei zusätzlich über einen geregelten Druck bzw. Schlupf an der Bremse 100 zustande.

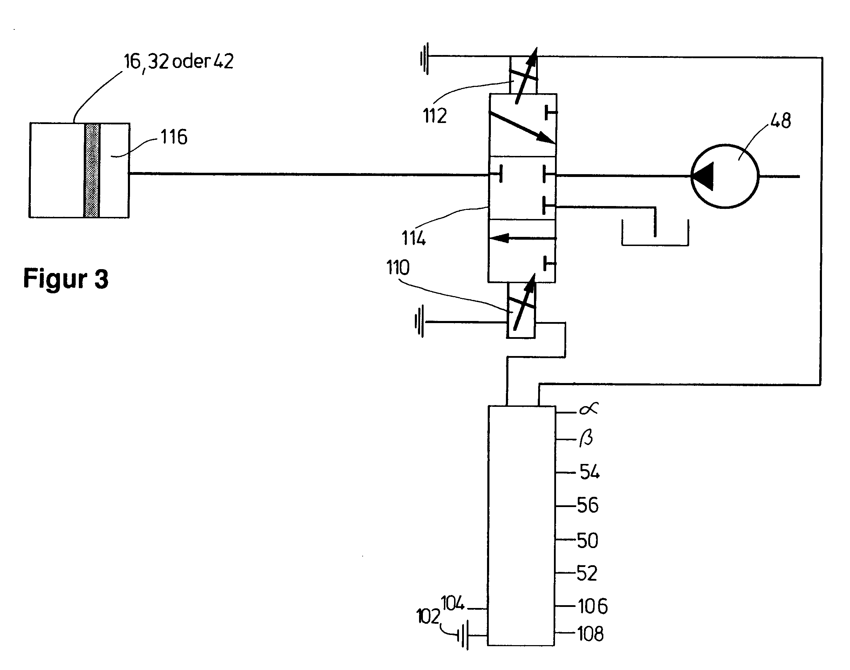

Aus Fig. 3 geht eine bevorzugte Ansteuerung der Kupplungen 16, 30, 42 hervor. Die Steuereinrichtung 34 wird durch einen Erdungsanschluß 102 und einen Spannungsanschluß 104 mit Energie versorgt. Sie empfängt Meßsignale der beiden Lenkwinkel (Alfa und Beta), der Vorderraddrehzahlen 54, 56, der Hinterraddrehzahlen 50, 52 eines Bremsbetätigungsschalters 106 und von Temperaturfühlern 108, die die Temperaturen der Kupplungen 16, 30, 42 überwachen. Die Steuereinrichtung 34 ermittelt Steuersignale nach dem erfindungsgemäßen Algorithmus und gibt diese an die Spulen 110, 112 eines elektromagnetisch betätigbaren 3-Wege-Proportionalventils 114 ab. Bei diesem Ventil 114 kann es sich um eines der Ventile 32, 44, 46 handeln. Die dargestellte elektro-magnetische Ansteuerung des Ventils 114 kann auch elektromotorisch durch einen Stellmotor oder auf andere Weise erfolgen.

Das 3-Wege-Proportionalventil 114 liegt zwischen der Hydraulikpumpe 48 und dem Hydraulikzylinder 116 der Kupplung 16, 30 oder 42. Durch Verstellen des Ventils 114 aus seiner neutralen Mittellage läßt sich der Druck in dem Hydraulikzylinder 116 erhöhen oder absenken, wodurch die Kupplung 16, 30 oder 42 mehr oder weniger in Eingriff gebracht wird.

Es ist auch eine andere Ansteuerung der Kupplungen 16, 30, 42 möglich. Eine derartige Alternative ist in Fig. 2 dargestellt, bei der an Stelle des 3-Wege-Proportionalventils ein über eine Magnetspule 118 elektromagnetisch ansteuerbares 2-Wege-Ventil 120 verwendet wird. Dieses 2-Wege-Ventil 120 kann zwischen den Stellungen "Druck senken" und "Druck erhöhen" durch die Steuereinrichtung 34 periodisch mit einer festen Grundfrequenz umgeschaltet werden. Dabei wird die Dauer der Öffnungs- und Schließphasen entsprechend dem erfindungsgemäßen Algorithmus durch die Steuereinrichtung 34 eingestellt.

**Patentansprüche**

1. Antriebsanordnung zur Steuerung und Verteilung der Antriebskraft auf die Räder (18, 20, 22, 24) eines Kraftfahrzeuges mit mindestens zwei angetriebenen Achsen (26, 38), von denen wenigstens eine Achse (26, 38) ein Achsdifferential (28, 40) enthält, dem eine Achsdifferentialsperre (30, 42) zugeordnet ist, mit wenigstens einem Lenkwinkelsensor (Alfa, Beta), mit Drehzahlsensoren (50, 52, 54, 56) zur Erfassung der Drehzahlen zumindest der Fahrzeugräder (18, 20, 22, 24) der wenigstens einen Achse (26, 38) und mit einer Steuereinrichtung (34), die die Achsdifferentialsperre (30, 42) zur Einstellung der Verteilung der Antriebskraft ansteuert, wobei die Steuereinrichtung (34) aus den ermittelten Drehzahlen der Fahrzeugräder (18, 20, 22, 24) der wenigstens einen Achse (26, 38) laufend einen Drehzahlverhältniswert bildet und diesen mit einer dem Lenkwinkel (Alfa, Beta) zugeordneten Verhältnisgröße vergleicht und in vorgebbaren Zeitintervallen Steuersignale an die Achsdifferentialsperre (30, 42) abgibt, die den Sperrgrad des Achsdifferentials (28, 40) erhöhen, wenn der Drehzahlverhältniswert größer ist als die dem Lenkwinkel zugeordnete Verhältnisgröße, dadurch gekennzeichnet, daß die Steuereinrichtung (34) den Drehzahlverhältniswert als tatsächliches Geschwindigkeitsdifferenzmaß gemäß der Beziehung

$$DDM_{ist} \; = \; \frac{|V_1 \; - \; V_r|}{V_m}$$

bildet, wobei $V_l$ und $V_r$ die Abrollgeschwindigkeiten des linken und rechten Rades (18, 20; 22, 24) sind und $V_m$ eine mittlere Abrollgeschwindigkeit der beiden Räder (18, 20, 22, 24) ist, daß die Steuereinrichtung (34) laufend die dem Lenkwinkel (Alfa, Beta) zugeordnete Verhältnisgröße als theoretisches Geschwindigkeitsdifferenzmaß für schlupffreie Abrollbedingungen gemäß der Beziehung

$$DDM_{soll} \; = \; \frac{|R_1 \; - \; R_r|}{R_m}$$

berechnet, wobei $R_l$ und $R_r$ die Spurkreisradien des linken und rechten Rades (18, 20; 22, 24) und $R_m$ der Spurkreisradius eines mittleren Ersatzrades sind, und daß die Steuereinrichtung (34) Steuersignale an die Achsdifferentialsperre (30, 42) abgibt, die den Sperrgrad des Achsdifferentials (28, 40) verringern, wenn das tatsächliche Geschwindigkeitsdifferenzmaß $DDM_{ist}$ kleiner ist als das theoretische Geschwindigkeitsdifferenzmaß $DDM_{soll}$.

2. Antriebsanordnung nach Anspruch 1, dadurch gekennzeichnet, daß zwischen einer angetriebenen Lenkachse (38) und einer angetriebenen Starrachse (26) ein Zentraldifferential (14) mit einer Zentraldifferentialsperre (16) vorgesehen ist, daß die Steuereinrichtung (34) aus dem Meßwert des Lenkwinkels (Alfa, Beta) den Radienquotient aus dem Spurkreisradius eines mittleren Ersatzrades der Lenkachse (38) und dem Spurkreisradius eines mittleren Ersatzrades der Starrachse (26) berechnet sowie aus den gemessenen Abrollgeschwindigkeiten der Räder (18, 20, 22, 24) für jede Achse (26, 38) einen Drehzahlmittelwert bildet und aus dem Drehzahlmittelwert der Lenkachse (38) und dem Drehzahlmittelwert der Starrachse (26) einen Drehzahlquotienten bildet, und daß die Steuereinrichtung (34) Steuersignale an die Zentraldifferentialsperre (16) abgibt, die den Sperrgrad des Zentraldifferentials (14) erhöhen, sofern der Drehzahlquotient größer ist als der Radienquotient, und den Sperrgrad verringern, sofern der Drehzahlquotient kleiner ist als der Radienquotient.

3. Antriebsanordnung nach Anspruch 1 oder 2, dadurch gekennzeichnet, daß wenigstens eine Achsdifferential-Sperre (30, 42) und gegebenenfalls die Zentraldifferentialsperre (16) hydraulisch betätigbare Kupplungen oder Bremsen sind, die den Sperrgrad mit zunehmendem Hydraulikdruck erhöhen.

4.  Antriebsanordnung nach Anspruch 2 oder 3, dadurch gekennzeichnet, daß das Zentraldifferential (14) die Getriebeausgangsleistung auf die Lenkachse (38) und die Starrachse (26) in Abhängigkeit des Lenkwinkels (Alfa, Beta) aufteilt, so daß bei Kurvenfahrt eine Erhöhung der Drehzahl der Lenkachsenräder (18, 20) gegenüber der Drehzahl der Starrachsenräder (22, 24) eintritt.

5.  Antriebsanordnung nach Anspruch 4, dadurch gekennzeichnet, daß das Zentraldifferential (14) einen Ravigneaux-Satz enthält, durch den das Abtriebsmoment eines Getriebeausganges (62) entsprechend den Radienverhältnissen der beiden Sonnenräder (68, 70) des Ravigneaux-Satzes auf die Abtriebe zur Lenkachse (38) und zur Starrachse (26) aufgeteilt wird.

6.  Antriebsanordnung nach Anspruch 5, dadurch gekennzeichnet, daß an Stelle des Zentraldifferentials eine Umschaltvorrichtung zur Umschaltung zwischen wenigstens zwei Geschwindigkeiten vorgesehen ist, die wenigstens eine der Fahrzeugachsen (38) antreibt und deren Ausgangsgeschwindigkeiten entsprechend den Bedingungen des Patentanspruches 2 umgeschaltet werden.

7.  Antriebsanordnung nach einem der Ansprüche 1 bis 6, dadurch gekennzeichnet, daß bei Ausfall der elektronischen Regelung und/oder des Hydraulikkreises das wenigstens eine Achsdifferential (28, 40) öffnet und gegebenenfalls das Zentraldifferential (14) sperrt.

8.  Antriebsanordnung nach einem der Ansprüche 1 bis 7, dadurch gekennzeichnet, daß wenigstens ein Temperatursensor (108) zur Erfassung einer Überbeanspruchung einer Differntialsperre (16, 30, 42) vorgesehen ist und daß die Steuereinrichtung (34) bei Überschreiten eines vorgebbaren Temperaturwertes Steuersignale an die Differentialsperre (16, 30, 42) abgibt, durch die diese automatisch völlig geschlossen oder geöffnet wird.

9.  Antriebsanordnung nach einem der Ansprüche 2 bis 8, dadurch gekennzeichnet, daß ein Bremssensor (106) vorgesehen ist, der bei Betätigung einer Fahrzeugbremse anspricht, und daß die Steuereinrichtung (34) beim Bremsen Steuersignale an die Zentraldifferentialsperre (16) abgibt und diese schließt.

10. Antriebsanordnung nach einem der Ansprüche 1 bis 9, dadurch gekennzeichnet, daß wenigstens eine Differentialsperre (16, 30, 42) durch von der Steuereinrichtung (34) periodisch angesteuerte hydraulische Ventile (120) betätigbar ist und der Eingriffsgrad der Differentialsperre (16, 30, 42) anhand der Länge der Pulsintervalle einstellbar ist.

**Claims**

1.  A drive system for control and distribution of drive power to the wheels (18, 20, 22, 24) of a motor vehicle with at least two driven axles (26, 38), of which at least one axle (26, 38) includes an axle differential (28, 40), with which is associated an axle differential lock (30, 42), with at least one steering angle sensor (alpha, beta), speed or rotation sensors (50, 52, 54, 56) for detecting the speeds of rotation of at least the vehicle wheels (18 20, 22, 24) of at least one axle (26, 28) and a control device (34) which controls the axle differential lock (30, 42) to adjust the distribution of drive power, wherein the control device (34) continuously forms a speed ratio value from the detected speeds of the vehicle wheels (18, 20, 22, 24) of the at least one axle (26, 28) and compares this ratio with a ratio magnitude associated with the steering angle (alpha, beta) and delivers control signals to the axle differential lock (30, 42) at predetermined intervals of time, these signals increasing the degree of locking of the axle differential (28, 40), when the speed ratio value is greater than the ratio magnitude associated with the steering angle, characterized in that control device (34) forms the speed ratio value as the actual speed difference ratio in accordance with the equation:

$$SDR_{act} = |V_l - V_r|/V_m$$

where $V_l$ and $V_r$ are the rolling speeds of the left and right wheels (18, 20; 22, 24) and $V_m$ is a mean rolling speed of the two wheels (18, 20, 22, 24), in that the control device (34) continuously computes the ratio magnitude associated with the steering angle (alpha, beta) as a theoretical speed difference ratio for slip-free rolling conditions according to the equation:

$$SDR_{req} = |R_l - R_r|/R_m$$

where $R_l$ and $R_r$ are the rolling circle radii of the left and right wheels (18, 20; 22, 24) and $R_m$ is the rolling circle radius of a mean equivalent wheel, and in that the control device (34) delivers control signals to the axle differential lock (28, 40) which reduce the degree of locking of the axle differential (28, 40) when the actual speed difference ratio $SDR_{act}$ is smaller than the theoretical speed difference ratio $SDR_{req}$.

2. A drive system according to claim 1, characterized in that a central differential (14) with a central differential lock (16) is provided between a driven steering axle (38) and a driven fixed axle (26), in that the control device (34) computes from the measured values of the steering angle (alpha, beta), the radius quotient of the radius of the rolling circle of a mean equivalent wheel of the steering axle (28) and the rolling circle radius a mean equivalent wheel of the fixed axle (26), and forms a speed of rotation mean value from the measured rolling speeds of the wheels (18, 20, 22, 24) for each axle (26, 38), and forms a speed of rotation quotient from the mean speed of rotation value of the steering axle (38) and the mean speed of rotation value of the fixed axle (26), and in that the control device (34) delivers control signals to the central differential lock (16) which increase the degree of locking of the central differential (14) so long as the speed of rotation quotient is greater than the radius quotient, and reduces the degree of locking so long as the speed of rotation quotient is smaller that the radius quotient.

3. A drive system according to claim 1 or 2, characterized in that at least one axle differential lock (30, 42) and if applicable the central differential lock (16) are hydraulically operated clutches or brakes, which increase the degree of locking with increasing hydraulic pressure.

4. A drive system according to claim 2 or 3, characterized in that the central differential (14) divides the gearbox output power to the steering axle (38) and the fixed axle (26) in dependence on the steering angle (alpha, beta), so that there is an increase in the speed of rotation of the steering axle wheels (18, 20) relative to the speed of rotation of the fixed axle wheels (22, 24) when travelling round a bend.

5. A drive system according to claim 4, characterized in that the central differential (14) includes a Ravigneaux set, through which the drive torque of a gearbox output (62) is divided in accordance with the radius ratio of the two sun-wheels (68, 70) of the Ravigneaux set to the drive for the steering axle (38) and for the rigid axle (26).

6. A drive system according to claim 5, characterized in that a switching device for switching between at least two speed is provided in place of the central differential and drives at least one of the vehicle axles (38) and whose output speed is switched in accordance with the conditions in claim 2.

7. A drive system according to any of claims 1 to 6, characterized in that the at least one axle differential (28, 40) opens and if appropriate the central differential (14) locks if the electronic control and/or the hydraulic circuit fails.

8. A drive system according to any of claims 1 to 7, characterized in that there is provided at least one temperature sensor (108) for detecting overloading of a differential lock (16, 30, 42) and in that the control device (34) delivers a control signal to the differential lock (16, 30, 42) when a predetermined temperature value is exceeded, through which the lock is automatically completely opened or closed.

9. A drive system according to any of claims 2 to 8, characterized in that a brake sensor (106) is provided and responds on actuation of a vehicle brake, and in that the control device (34) delivers control signals to the central differential lock (16) and closes this during braking.

10. A drive system according to any of claims 1 to 9, characterized in that at least one differential lock (16, 30, 42) can be actuated by hydraulic valves (120) periodically controlled by the control device (34) and the degree of engagement of the differential lock (16, 30, 42) can be adjusted on the basis of the length of the pulse intervals.

**Revendications**

1. Dispositif d'entraînement pour la commande et la répartition de la force d'entraînement entre les roues (18,20,22,24) d'un véhicule automobile comportant au moins deux essieux moteurs (26,38), dont l'un au moins (26,38) contient un différentiel (28,40), auquel est associé un dispositif de blocage de différentiel (30,42), comportant au moins un capteur de l'angle de braquage (alpha, bêta), comportant des capteurs (50,52,54,56) de la vitesse de rotation servant à détecter les vitesses de rotation au moins des roues (18,20,22,24) d'un essieu (26,38) du véhicule et un dispositif de commande (34), qui commande le dispositif de blocage de différentiel (30,42) pour le réglage de la répartition de la force d'entraînement, le dispositif de commande (34) formant en permanence une valeur du rapport des vitesses de rotation à partir des vitesses de rotation déterminées des roues (18,20,22,24) d'au moins un essieu (26,38) du véhicule et comparant cette valeur de rapport à une valeur de rapport associée à l'angle de braquage (alpha, bêta) et délivrant au dispositif de blocage de différentiel (30,42), à des intervalles de temps pouvant être prédéterminés, des signaux de commande qui augmentent le degré de blocage du différentiel (28,40), lorsque la valeur du rapport des vitesses de rotation est supérieure à la valeur du rapport associée à l'angle de braquage, caractérisé en ce que le dispositif de commande (34) forme la valeur du rapport des vitesses de rotation sous la forme d'une valeur effective de différence de vitesse conformément à la relation

$$DDM_{réelle} = \frac{|V_1 - V_r|}{V_m}$$

   $V_l$ et $V_r$ représentant les vitesses de roulement des roues gauche et droite (18,20; 22,24) et $V_m$ une vitesse moyenne de roulement des deux roues (18,20,22,24), que le dispositif de commande (34) calcule en permanence la valeur du rapport, associée à l'angle de braquage (alpha, bêta), en tant que valeur théorique de différence de vitesse pour des conditions de roulement sans glissement conformément à la relation

$$DDM_{consigne} = \frac{|R_1 - R_r|}{R_m}$$

   $R_l$ et $R_r$ désignant les rayons des cercles de braquage des roues gauche et droite (18,20; 22,24) et $R_m$ le rayon du cercle de braquage d'une roue médiane de remplacement, et que le dispositif de commande (34) envoie au dispositif de blocage de différentiel (30,42), des signaux de commande qui réduisent le degré de blocage du différentiel (28,40), lorsque la valeur effective de différentes vitesses $DDM_{réelle}$ est inférieure à la valeur théorique de différence de vitesse $DDM_{consigne}$.

2. Dispositif d'entraînement selon la revendication 1, caractérisé en ce qu' un différentiel central (14) est prévu entre un essieu moteur orientable (38) et un essieu moteur fixe (26) comportant un dispositif de blocage de différentiel (113), que le dispositif de commande (34) calcule, à partir de la valeur de mesure de l'angle de braquage (alpha, bêta), le quotient du rayon du cercle de braquage d'une roue médiane de remplacement de l'essieu orientable (38) au rayon du cercle de braquage d'une roue médiane de remplacement de l'essieu fixe (26) et forme, à partir des vitesses mesurées de roulement des roues (18,20,22,24) pour chaque essieu (26, 38), une valeur moyenne de la vitesse de rotation et forme, à partir de la valeur moyenne de la vitesse de rotation de l'essieu orientable (38) et de la valeur moyenne de la vitesse de rotation de l'essieu fixe (26), un quotient de vitesses de rotation et que le dispositif de commande (34) envoie au dispositif de blocage (16) de différentiel central, des signaux de commande qui augmentent le degré de blocage du différentiel central (14) dans la mesure où le quotient des vitesses de rotation est supérieur au quotient des rayons, et réduisent le degré de blocage dans la mesure où le quotient des vitesses de rotation est inférieur au quotient des rayons.

3. Dispositif d'entraînement selon la revendication 1 ou 2, caractérisé en ce qu'au moins un dispositif de blocage de différentiel (30,42) et éventuellement le dispositif de blocage (16) du différentiel central sont des accouplements ou des freins pouvant être actionnés par voie hydraulique et qui augmentent le degré de blocage lorsque la pression hydraulique augmente.

4. Dispositif d'entraînement selon la revendication 2 ou 3, caractérisé en ce que le différentiel central (14) répartit la puissance de sortie de la transmission entre l'essieu orientable (38) et l'essieu fixe (26) en fonction de l'angle de braquage (alpha, bêta), de sorte que, dans le cas du franchissement d'une courbe, il se produit un accroissement de la vitesse de rotation des roues (18,20) de l'essieu orientable par rapport à la vitesse de rotation des roues (22,24) de l'essieu fixe.

5. Dispositif d'entraînement selon la revendication 4, caractérisé en ce que le différentiel central (14) contient un ensemble Ravigneaux, grâce auquel le couple de sortie d'une sortie (62) de la transmission est réparti conformément aux rapports des rayons des deux roues planétaires (68,70) de l'ensemble Ravigneaux, aux systèmes menés pour l'essieu orientable (38) et l'essieu fixe (26).

6. Dispositif d'entraînement selon la revendication 5, caractérisé en ce qu'à la place du différentiel central, il est prévu un dispositif de commutation servant à réaliser une commutation entre au moins deux vitesses, et qui entraîne au moins l'un des essieux (38) du véhicule et dont les vitesses de sortie sont commutées conformément aux conditions de la revendication 2.

7. Dispositif d'entraînement selon l'une des revendications 1 à 6, caractérisé en ce que dans le cas d'une défaillance de la régulation électronique et/ou du circuit hydraulique, au moins un différentiel (28,40) s'ouvre et éventuellement le différentiel central (14) se bloque.

8. Dispositif d'entraînement selon l'une des revendications 1 à 7, caractérisé en ce qu'il est prévu au moins un capteur de température (108) pour détecter une contrainte excessive d'un dispositif de blocage de différentiel (16,30,42) et qu'en cas de dépassement d'une valeur de température pouvant être prédéterminée, le dispositif de commande (34) envoie au dispositif de blocage de différentiel (16,30,42), des signaux de commande qui permettent de fermer ou d'ouvrir automatiquement et d'une manière complète ces dispositifs de blocage.

9. Dispositif d'entraînement selon l'une des revendications 2 à 8, caractérisé en ce qu'il est prévu un capteur de frein (106), qui répond lors de l'actionnement d'un frein du véhicule, et que lors du freinage, le dispositif de commande (34) envoie des signaux de commande au dispositif de blocage (16) du différentiel central et ferme ce dispositif de blocage.

10. Dispositif d'entraînement selon l'une des revendications 1 à 9, caractérisé en ce qu'au moins un dispositif de blocage de différentiel (16,30,42) peut être actionné par des soupapes hydrauliques (120), qui sont commandées périodiquement par le dispositif de commande (34), et que le degré d'engrènement du dispositif de blocage de différentiel (16,30,42) est réglable en fonction de la durée de l'intervalle entre impulsions.

**Figur 1**

EP 0 553 670 B1

**Figur 2**

EP 0 553 670 B1

**Figur 3**

16, 32 oder 42

116

112

114

110

48

α

β

54

56

50

52

106

108

102 104

EP 0 553 670 B1

**Figur 4**

116

16,32 oder 42

120

118

48

α

β

54

56

50

52

106

108

EP 0 553 670 B1